Europäisches Patentamt

European Patent Office

Office européen des brevets

(19)

(11) Veröffentlichungsnummer : **0 115 082**
**B1**

(12) **EUROPÄISCHE PATENTSCHRIFT**

(45) Veröffentlichungstag der Patentschrift :
16.06.87

(21) Anmeldenummer : 83113208.9

(22) Anmeldetag : 29.12.83

(51) Int. Cl.⁴ : **A 47 J 41/02**

(54) **Isolierkanne.**

(30) Priorität : 31.01.83 DE 8302563 U

(43) Veröffentlichungstag der Anmeldung :
08.08.84 Patentblatt 84/32

(45) Bekanntmachung des Hinweises auf die Patenterteilung : 16.06.87 Patentblatt 87/25

(84) Benannte Vertragsstaaten :
AT BE CH DE FR GB IT LI LU NL SE

(56) Entgegenhaltungen :
DE-A- 2 833 609
GB-A- 691 177
GB-A- 1 002 003
GB-A- 1 141 907
US-A- 1 987 892

(73) Patentinhaber : Rotpunkt Dr. Anso Zimmermann
Industriestrasse
D-6434 Niederaula / Bad Hersfeld (DE)

(72) Erfinder : Zimmermann, Anso, Dr.
Seilerweg 34
D-6430 Bad Hersfeld (DE)

(74) Vertreter : Körber, Wolfhart, Dr. et al
Patentanwälte Dipl.-Ing. H. Mitscherlich Dipl.-Ing. K.
Gunschmann Dr.rer.nat. W. Körber Dipl.Ing. J.
Schmidt-Evers Dipl.-Ing. W. Melzer Steinsdorfstrasse
10
D-8000 München 22 (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt. wenn die Einspruchsgebühr entrichtet worden ist (Art. 99(1) Europäisches Patentübereinkommen).

Jouve. 18. rue St-Denis, 75001 Paris, France

## Beschreibung

Die Erfindung bezieht sich auf eine Isolierkanne, bestehend aus einer mehrteiligen Außenschale aus Kunststoff, die einen im Längsschnitt ausgebauchten und einen nicht ausgebauchten Verlauf des Mantels aufweist, mit einem oberen und einem unteren Mantelteil, einem in einer Bodenöffnung des unteren Mantelteils angebrachten Bodenteil und einem in die Außenschale eingesetzten Isoliereinsatz.

Derartige Isolierkannen sind beispielsweise aus der US-A-1,712,228 bekannt. Bei Isolierkannen dieser Art mit Kunststoffaußenschale besteht der Wunsch, diese äußerlich an herkömmliche Kannen anzugleichen, insbesondere bauchige Kaffeekannen. Dadurch soll erreicht werden, daß derartige Isolierkannen auch bei hochwertigen und auch alten Kaffeeservicen, auch aus Porzellan, ohne optische Beeinträchtigung verwendet werden können, trotz der Herstellung der Außenschale moderner Isolierkannen aus Kunststoff.

Bei der Herstellung derartiger Isolierkannen treten jedoch zwei wesentliche Probleme auf. Zum einen muß der die Ausbauchung — die mit anderen Worten auch mit Bombierung bezeichnet werden kann — aufweisende Mantel in möglichst einfacher Weise herstellbar sein. Dazu eignen sich bei aus Kunststoff bestehende Außenschale und Boden übliche Formungsverfahren, die jedoch bei starken Ausbauchungen des Mantels sehr aufwendig sind, da mit geteilten oder zusammenfallenden Kernteilen der Formen gearbeitet werden muß, beispielsweise beim Spritzgießen der Außenschale in Spritzgußformen. Das andere Herstellungsproblem besteht darin, daß der Isoliereinsatz, der aus Gründen des Fassungsvermögens einer solchen Isolierkanne ebenfalls bauchig ausgebildet sein sollte, in das Innere der Außenschale von unten einzusetzen ist. Üblicherweise wird dazu der den Boden bildende Teil der Außenschale von dem die Ausbauchung aufweisenden Mantelteil getrennt.

Um bezüglich der beiden genannten Probleme die Ausbauchung, die ja eine erhebliche Hinterschneidung darstellt, beherrschen zu können, ist man der Auffassung gewesen, daß im Bereich des größten Durchmessers der Ausbauchung eine Nahtstelle vorzusehen ist, so daß sowohl eine einfachere Herstellung als auch ein günstiges Einführen des Isoliergefäßes in die Teile der Außenschale ermöglicht ist. Diese Nahtstelle ist, da sie im Bereich der optisch hervortretenden Ausbauchung liegt, gut sichtbar und störend und wird aus Fertigungs- und Montagegründen als unvermeidbar angesehen. Wegen der deutlich sichtbaren Nahtstelle kann auf den ersten Blick festgestellt werden, daß es sich um eine Isolierkanne mit Kunststoff-Außenschale handelt. Dies ist interner, der Anmelderin bekannter Stand der Technik.

Es ist Aufgabe der Erfindung, eine Isolierkanne der eingangs genannten Art so auszugestalten, daß sowohl die Mantelteile leicht herstellbar sind als auch die Isolierkanne einfach zusammenbaubar bleibt.

Diese Aufgabe wird dadurch gelöst, daß der untere Mantelteil die Ausbauchung aufweist, und der obere Mantelteil von der Nahtstelle zwischen den Mantelteilen nach oben im Durchmesser abnimmt, daß der obere und der untere Mantelteil an der Nahtstelle durch eine unlösbare Rastverbindung miteinander verbunden sind, und daß der Isoliereinsatz nach Lösen des Bodenteils durch die Bodenöffnung des unteren Mantelteils in die Außenschale eingeführt wird und durch Wiederanbringen des Bodenteils dort festgelegt wird.

Vorteilhafte Weiterbildungen der Erfindung sind in den Unteransprüchen beschrieben.

Die Erfindung ermöglicht, daß im Bereich der Ausbauchung keine Nahtstelle mehr ersichtlich ist, trotzdem der Mantelteil der Außenschale aus zwei Teilen gebildet ist. Wesentlich ist, daß der die Ausbauchung aufweisende Abschnitt des Mantelteiles ohne störende Naht ist. Die Herstellung einer derart aufgebauten Außenschale vermeidet eine aufwendige Entformungstechnik beim Spritzgießen. Andererseits ist durch geeignete Dimensionierung des den Boden bildenden Teiles gegenüber dem Isoliereinsatz, der üblicherweise ebenfalls ausgebaucht ist, der Isoliereinsatz in das Innere des Mantels einführbar, ggf. auswechselbar und mittels des den Boden bildenden Teiles unter Toleranzausgleich fixiert und abgestützt. Die Rastverbindung zwischen dem oberen und dem unteren Mantelteil kann daher aus einer einfachen unlösbaren Rastverbindung bestehen.

Die Erfindung wird anhand der in der Zeichnung dargestellten Ausführungsbeispiele näher erläutert.

Es zeigen

Figur 1 im Schnitt eine Isolierkanne mit zweiteiliger Außenschale

Figur 2 im Schnitt vergrößert die Nahtstelle zwischen den Mantelteilen der Außenschale.

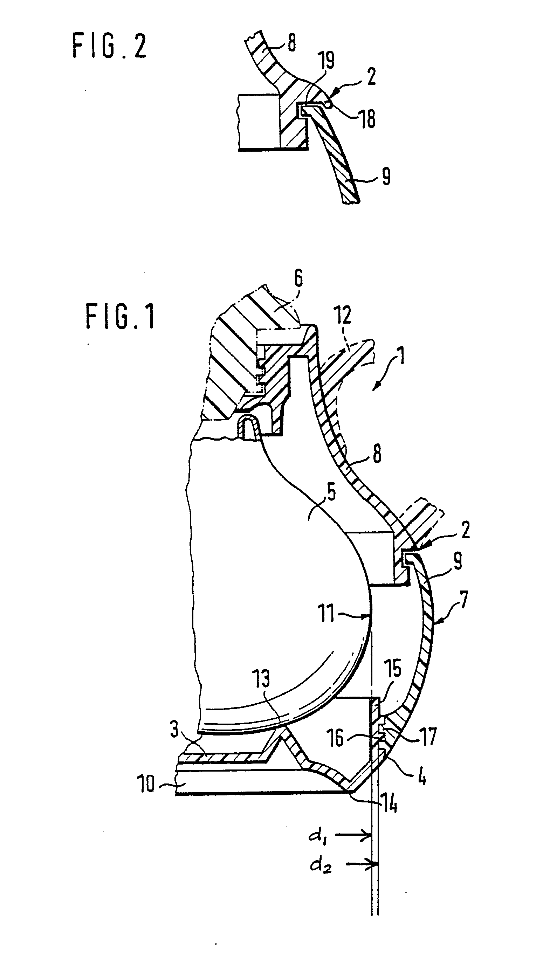

Die in Figur 1 dargestellte Isolierkanne 1 weist eine aus Kunststoff bestehende Außenschale aus zwei Mantelteilen 8 und 9 mit einer Bodenöffnung 4 auf. Der obere Mantelteil 8 weist einen Henkel 12 auf. Der untere Teil 9 weist eine deutliche Bombierung 7 und am Unterende die Bodenöffnung 4 auf. Die Verbindung zwischen den beiden Mantelteilen 8 und 9 an der Nahtstelle 2 ist über eine im einzelnen nicht dargestellte Rastverbindung geschaffen. In die Bodenöffnung 4 im Mantelteil 9 ist ein Teil 10 mit einem Boden 3 eingesetzt. Der Boden 3 stützt einen Isoliereinsatz 5, wie einen Glaseinsatz nach Art eines Dewar-Gefäßes ab, dessen nach oben offenes Ende gegen einen Rand des Mantelteiles 8 an dessen Oberteil anliegt. Das oben offene Ende des Mantelteiles 8 und des Isoliereinsatzes 5 ist mittels eines Deckels 6 verschließbar. Der Deckel kann einklappbar oder einschraubbar sein. Das Mantelteil 9 weist eine deutlich ausgeprägte Bombierung 7 auf. Unter Bombierung ist hierbei ein Verlauf in Axialrichtung zu verstehen, bei dem zunächst der Durchmesser zu und dann wieder abnimmt.

Das Isoliergefäß 5 weist eine entsprechende Ausbauchung 11 auf. Dabei ist zu bemerken, daß der Abstand zwischen der Außenseite des Isoliereinsatzes 5 und der Innenseite der Außenschale, insbesondere auch im Bereich der Bombierung 7, in der Praxis wesentlich geringer ist als dies aus den schematischen Darstellungen hervorgeht. Der den Boden 3 aufweisende Teil 10 ist zur Abstützung des Isoliereinsatzes 5 ausgebildet und weist dazu eine umlaufende ringförmige Auflagefläche 13 auf, in die der untere Teil des Isoliereinsatzes 5 eingesetzt ist und dort zur Anlage kommt. Andererseits weist der Teil 10 einen umlaufenden Standring 14 auf, auf den die gesamte Isolierkanne 1 zum Stehen kommt. Ein randseitiger nach oben ragender Zylinderabschnitt 15 des Teils 10 trägt ein Außengewinde 16, das in ein Innengewinde 17 in einer ringförmigen Verdickung des Unterendes des Mantels 2 im Bereich der Bodenöffnung 4 eingreift.

Um den Isoliereinsatz 5 in das Innere des Mantels 2 einführen zu können, ist der Durchmesser $d_2$ der Bodenöffnung 4 so bemessen, daß er größer als der größte Durchmesser $d_1$ des Isoliereinsatzes 5 ist. Dadurch kann der Isoliereinsatz 5 von unten in das Innere des Mantels 2 eingeführt und dort mittels des anschließend in die Bodenöffnung 4 eingeschraubten Teils 10 festgelegt werden.

Es ist wesentlich, daß im Verlauf der Bombierung 7 keine störende, optisch sichtbare Unterbrechung vorhanden ist. Auf diese Weise kann für die beiden Teile 8 und 9 des Mantels eine unterschiedliche Gestaltung, z. B. farbliche Ausbildung, gewählt werden, um entsprechende optische Effekte zu erreichen. Im Bereich der Bombierung 7 ist keine störende Naht vorhanden. In Figur 2 ist vergrößert im Schnitt ersichtlich, wie die sozusagen im Rande der Bombierung liegende Nahtstelle 2 darüber hinaus optisch kaschiert werden kann. Dazu ist an dem Mantelteil 8 ein umlaufender Vorsprung 18 angeformt, welcher die Fuge 19 der Nahtstelle 2 so abdeckt bzw. nach unten verlegt, daß in Draufsicht auf die Nahtstelle 2 die Fuge 19 nicht sichtbar ist.

## Patentansprüche

1. Isolierkanne (1), bestehend aus einer mehrteiligen Außenschale (3, 8, 9) aus Kunststoff, die einen im Längsschnitt ausgebauchten und einen nicht ausgebauchten Verlauf des Mantels aufweist, mit einem oberen und einem unteren Mantelteil (8, 9), einem in einer Bodenöffnung des unteren Mantelteils (9) angebrachten Bodenteil (10) und einem in die Außenschale eingesetzten Isoliereinsatz, dadurch gekennzeichnet, daß der untere Mantelteil (9) die Ausbauchung aufweist, und der obere Mantelteil (8) von der Nahtstelle (2) zwischen den Mantelteilen (8, 9) nach oben im Durchmesser abnimmt, daß der oberere und der untere Mantelteil (8, 9) an der Nahtstelle (2) durch eine unlösbare Rastverbindung miteinander verbunden sind, und daß der Isoliereinsatz nach Lösen des Bodenteils durch die Bodenöffnung des unteren Mantelteils in die Außenschale eingeführt wird und durch Wiederanbringen des Bodenteils dort festgelegt wird.

2. Isolierkanne nach Anspruch 1, dadurch gekennzeichnet, daß die Bodenöffnung (4) einen Durchmesser ($d_2$) besitzt, der größer als der größte Durchmesser ($d_1$) des ebenfalls ausgebauchten Isoliereinsatzes (5) ist.

3. Isolierkanne nach Anspruch 1, dadurch gekennzeichnet, daß eines der Mantelteile (8) angrenzend an die Nahtstelle (2) einen umlaufenden Vorsprung (18) aufweist, der das andere Mantelteil (9) zumindest so weit übergreift, daß die Fuge (19) zwischen den Mantelteilen optisch beseitigt ist.

## Claims

1. An insulated container (1) comprising a multipart outer shell (3, 8, 9) of plastics, having a casing with a portion which is convex in the longitudinal section and with a non-convex portion, including an upper and a lower portion (8, 9) of the casing, a bottom part (10) arranged in an opening in the bottom of the lower portion (9) of the casing, and an insulating insert positioned in the outer shell, characterized in that the lower portion (9) of the casing is the convex portion, and the upper portion (8) of the casing decreases in diameter upwardly from the seam (2) between the portions (8, 9) of the casing, that the upper and lower portions (8, 9) meet at the seam (2) and are connected by an undetachable locking clamp means, and that the insulating insert is insertable into the outer shell through the opening in the bottom of the lower portion of the casing after detaching the bottom part and is secured there by re-attaching the bottom part.

2. An insulated container according to claim 1, characterized in that the bottom opening (4) has a diameter ($d_2$) larger than the maximum diameter ($d_1$) of the insulating insert which also has a convex configuration.

3. An insulated container according to claim 1, characterized in that one of the portions (8) of the casing has an encircling projection (18) adjacent to the seam (2), which overlaps the other portion (9) at least to such an extent that the joint (19) between the portions of the casing is not visible.

## Revendications

1. Récipient isolant (1) constitué par une coque extérieure (3, 8, 9) en matière plastique en plusieurs parties, qui présente en coupe longitudinale une forme d'enveloppe ventrue et une forme d'enveloppe non ventrue, avec une partie d'enveloppe supérieure (8) et une partie d'enveloppe inférieure (9), une partie de fond (10) disposée dans l'ouverture de fond de la partie d'enveloppe inférieure (9) et un insert isolant (5) disposé dans la coque extérieure, caractérisé par le fait que la partie d'enveloppe inférieure (9) est ventrue et la partie d'enveloppe supérieure (8) diminue de diamètre vers le haut à partir de la jonction (2) entre les parties d'enveloppe (8, 9), que les parties d'enveloppe supérieure et inférieure (8, 9) sont assemblées par un encliquetage indémontable et que l'insert isolant (5) est introduit dans la coque extérieure après qu'on ait retiré la partie de fond à travers l'ouverture du fond de la partie d'enveloppe inférieure et y est bloqué en remplaçant cette partie de fond.

2. Récipient isolant selon la revendication 1, caractérisé par le fait que l'ouverture de fond (4) a un diamètre ($d_2$) supérieur au plus grand diamètre ($d_1$) de l'insert isolant (5), également ventru.

3. Récipient isolant selon la revendication 1, caractérisé par le fait qu'une des parties d'enveloppe (8) présente une projection (18) sur tout le tour au voisinage de la jonction (12) qui déborde sur l'autre partie d'enveloppe (9) assez loin pour éliminer optiquement le joint (19) entre les parties d'enveloppe.

0 1 1 5 0 8 2

FIG.2

FIG.1

1